# EUROPEAN PATENT SPECIFICATION

(11) **EP 2 040 863 B1**
(45) Date of publication and mention of the grant of the patent: **27.03.2019**
(21) Application number: 07755971.4
(22) Date of filing: 24.04.2007
(51) Int. Cl.: B22C 1/00, C08K 5/132, B22C 1/02, B22C 13/08

(54) **ELIMINATION OF ODORS IN SHELL SAND ENCAPSULATION**
BESEITIGUNG VON GERÜCHEN IN EINER FORMMASKENEINBETTUNG
ÉLIMINATION DES ODEURS DANS LE CADRE DE L'ENCAPSULATION DE SABLE DE MOULAGE EN CARAPACE

(30) Priority: 18.05.2006 US 801629 P; 27.12.2006 US 645992
(43) Date of publication of application: 01.04.2009
(73) Proprietor: Fairmount Santrol Inc., Chardon, OH 44024 (US)
(72) Inventor: Kerns, Kelley J., St. Joseph, MI 49085 (US); Schwark, Ryan, Gailen, MI 49113 (US); Mizwicki, Robert H., Naperville, LA 60540 (US)
(74) Representative: Barton, Matthew Thomas
(86) International application number: PCT/US2007/009943
(87) International publication number: WO 2007/136501

(56) References cited:
- JP-A- 55 094 751
- JP-A- 2002 210 538
- JP-A- 2004 050 182
- US-A- 3 852 232
- US-A- 3 852 232
- US-A- 4 336 179
- US-A- 4 942 217
- US-A- 5 189 079
- US-A- 5 910 521
- US-B2- 6 569 918
- DATABASE WPI Week 198622 Thomson Scientific, London, GB; AN 1986-140694 XP002526088, & JP 61 076162 A (MATSUSHITA ELECTRIC WORKS LTD) 18 April 1986 (1986-04-18)
- DATABASE WPI Week 198622, Derwent Publications Ltd., London, GB; AN 1986-10694, XP008093187 & JP 61 076162 A 18 April 1986

## Description

### Technical Field of the Invention

The present invention relates generally to an improved process for coating sand, ceramic and other substrates (generally industrial aggregates) with novalac resins and other similar coatings. More particularly it relates to a compound and method of application for producing resin-coated sands which cure with minimal odor.

### Background of the Invention

The prior art will be described in terms of resin coated sand used in the Shell Process employed by the metal casting and foundry industry. The shell process was developed in Germany during the Second World War, and the process was used to produce molds for mortars, artillery shells and other projectiles. The Germans attempted to keep the process secret after the war; however, the process was discovered by allied investigators who placed the process in the public domain as *war booty* which then provided the foundry industry with a revolutionary process.

The Shell Process (also known as the *Croning or C Process*) is used to produce hollow light weight molds and cores for pipe hubs, cores, crank shafts, intake manifolds for engines, etc. In fact, more foundries utilize the shell process, to produce resin sand cores and molds, than any other process. The process is extensively applied worldwide.

The original Croning process blended raw sand with powdered phenolic resin and powdered hexamethylenetetramine (a curing agent or hardener) "hexa" which was gravity fed into a preheated pattern. The heat melted the resin and hardener to fuse the sand within the pattern (or mold). After a suitable thickness of sand was obtained, the inactivated sand was dumped from the pattern, leaving the hollow core sand mold. As time went by, the process was improved by pre-coating the sand with the required ingredients (resin - hardener - wax - fillers - etc.) at a sand facility. The "foundry sand" is then sold as a free-flowing product to foundries (or foundries produce their own free-flowing product).

The current state of the art uses batch mixers to coat substrates (minerals, ceramics, etc. sometimes referred to generally as industrial aggregates) with a resin(s) and other ingredients. That is, sand (aggregate) is pre-weighed, heated to the desired temperature and transferred into a batch mixer. Resin(s) and additives are then added sequentially and held in the mixer until the material has reached the required cure stage or begins to break down into smaller agglomerated clumps of sand (aggregate) and resin. The mixture is then dumped and the cycle is repeated. Newer mixers now use a continuous process; however, the manufacturing steps and compounds used are essentially similar.

More specifically in the current state of the art for producing coated foundry sand pre-weighed sand is heated to between 280°F to 380°F. The sand is then fed into a Muller type mill (or continuous mixer) and the resin dumped in to sand. The heat from the sand melts the resin and the resin flows around the sand grains to encapsulate the grain. After sufficient mull time, liquid hexa is added to the sand and resin, generally below 280°F. The hexa/resin mix reacts slightly to begin to crosslink the coating before a water quench is added to bring the sand temperature down to below 200°F. This quench stops the reaction of the hexa/resin and the resin coated sand is said to be at the "B" stage. The mixture continues to mull and dry completely and break apart into resin coated sand which essentially is an encapsulation of individual sand grains. The resin coated sand is advanced to the "C" stage when the coated sand is placed into a heated tool (the mold at a foundry) at 450-600°F. This heat liberates formaldehyde and ammonia from the original hexa solution (hexa in a liquid form is a combination of ammonia (40%) and formaldehyde (60%). The liberated formaldehyde reacts further with the resin to crosslink the resin and creates a solid form or a core or mold, and the free ammonia is given off as a volatile organic gas that has an odor that is offensive to the operators and the neighboring communities.

Several instances of a curing agent chosen to reduce emissions of ammonia appear in the prior art. Gardziella et al. disclosed a "Novel Heat-hardenable Binders Phenol-formaldehyde + HMT + Acid" in U.S. Patent 4,942,217. Gardziella still used hexa as their curing agent but stated that the resin compounds and binders helped reduce emissions. An example of the composition used for "hot bake" (shell or Croning) casting sands was given.

Geoffrey et al., in U.S. Patent 5,189,079, disclose a "Low Free Formaldehyde Phenolic Polyol Formulation" in which the inventors recognize the need to reduce the odor of formaldehyde in urethane binders which are used in the 'cold-box' and 'no-bake' core casting sand processes.

Johnson et al. disclosed a "Benzoxazine Polymer Composition" in U.S. Patent 5,910,521 recognizing the need to cure novalac resins without the emission of ammonia. Johnson et al. disclose the use of their compound in foundry sand; however, their examples teach mixing of powdered resin with their powdered curing agent with the foundry sand. Johnson et al. state that their curing polymer may be a solid at room temperature and will take the form of a powder. However, they add that if the water removal is controlled during the manufacturing process, then the curing polymer may be produced in liquid form.

Waitkus et al. disclosed a "Polymer Composition for Curing Novalac Resins" in U.S. Patent 6,569,918 also recognizing the need to reduce ammonia emissions. Waitkus et al., like Johnson et al., also disclose the use of their compound in foundry sand and with silica sand (proppants); however, unlike Johnson et al., the Waitkus examples disclose the addition of their curing agent as a liquid - a suspension in methanol - well after the sand is coated with the novalac resin (as a strict laboratory experiment). It should be remembered that the Waitkus compound includes odor producing ingredients which include ammonia which is liberated upon curing.
US 3,852,232 discloses aqueous resin solutions and their mixing with foundry sand to provide a wet mixture for production of foundry cores.

Thus, there remains the need for resin-coated casting sand, or, in general, resin coated industrial aggregates, that reduces or eliminates offensive odors while keeping the required free flowing characteristic until the resin is activated in the mold.

### Summary of the Invention

The invention consists of the addition of two additional compounds to almost any standard resin-coated sand manufacturing process: a buffering solution that reacts with the free ammonia to form an ammonium salt and a masking agent that covers up the minor remaining ammonia, phenols and other reaction byproducts. The two additional components are preferably added in 50:50 proportions to each other and in direct proportion to the quantity of Hexa that appears in the standard encapsulation formulation. Thus, the inventive process and compound produces a dry, free flowing coated aggregate that is easy to use, that is friendly to the environment and user, and that retains the expected qualities of resin coated aggregates.

The invention is set out in independent claims 1 and 8. Preferred features of the invention are set out in the dependent claims.

Essentially the instant invention proposes a unique process for coating aggregates using the industry standard process producing a dry, free flowing coated aggregate with standard properties for use in casting industry and as a proppant in the oil industry while offering a new composition of matter that eliminates, by precipitation, any free ammonia and masks other curing odors when the product, produced by the process is taken to the "C" stage. The resulting product cures at standard temperatures and conditions while releasing minimal free ammonia.

The inventors are employees of a company that offers, among other coated aggregates, a low hexa coated aggregate that utilizes a novalac resin, plus a liquid resole with the addition of roughly one-half the normal amount of hexa (plus additives). In fact, the low hexa product comprises a 2-stage Novalac system in combination with the single stage "liquid resole" system up to 30% (70% novolac/30% resole), but the past art has not been able to gain adequate crosslink density/or tensile strength without the addition of 6-10% hexa based on resin content. The low hexa product, still using hexa, works well, but still produces a relatively strong odor - mainly ammonia due to the hexa - when the aggregate is brought to the final cure stage (C-stage). Other standard novalac based products exhibit an even stronger odor when brought to the final cure stage. A product formulation showing some of the current art is shown in column 1 of Table 1. For example, it is well understood in the industry that the term hardener refers to the co-reactant or curing agent (such as hexa) and implies the necessary added accelerant (such as salicylic acid). Other examples would include hexa acting as the curing agent combined with a solid resole (such as a phenol-formaldehyde polymer) acting as the accelerant. An example is shown in column 2 of Table 1.

The inventors became aware of buffering solutions used for odor control in the water and wastewater and pulp and paper mill industry (plus others) in which free ammonia is a problem. These buffering solutions are scientifically formulated to react with odorous gases and diluted and applied topically or locally to eliminate malodors in confined spaces and if used outdoors will prevent malodors from traveling to surrounding areas. A review of the literature showed that such buffer solutions had not been tried in sand coating industry (industrial coated aggregates), probably because the effects on the final product were unknown.

**Table 1**

| | Standard | With Cure Agent |
|---|---|---|
| Sand | 97.36 | 97.36 |
| Resin 1 | 0.97 | 0.93 |
| Hexa Curing | 0.36 | 0.37 |
| Agent | 0.00 | 0.05 |
| Water | 1.20 | 1.24 |
| Accelerator | 0.02 | 0.00 |
| Buffer | 0.001 | 0.0009 |
| Mask | 0.001 | 0.0009 |
| Wax | 0.024 | 0.024 |
| | 99.94 | 99.96 |

Essentially the buffering solution operates under the following chemical equation:

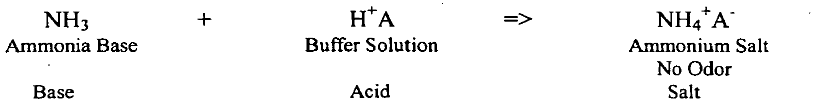

These buffering solutions are generally diluted with water and sprayed in the odorous area as an atomized mist. In water treatment or in the pulp and paper industry, this type of equipment presents no problem. However the in foundry business the additional equipment would be impractical: what was needed was to incorporate the buffer as part of the encapsulation process.

The inventors then experimented with various resin-coated aggregates and associated manufacturing processes. They found that a buffer solution could become a part of the encapsulation process, if the buffer solution were added immediately after the quench water stage of manufacture. They then took samples of the resin-coated sand and drove the samples to the cured ("C") stage, noting that 'eureka' the ammonia odor was almost completely eliminated. Further testing showed that the quality of the resin-coated sand was not affected. That is to say the melt temperature and tensile strength of the buffered product was comparable to non-buffered products.

Furthermore, it was noted in subsequent testing that casting problems due to ammoniacal nitrogen were reduced or eliminated. The reasons for this reduction are straightforward in retrospect. As explained above, free ammonia is produced when the coated aggregate is taken to the "C" stage. The free ammonia is part of the curing process in that the hexa within the encapsulated sand is split into ammonia and formaldehyde in the presence of heat and moisture. It is known that some of the free ammonia is converted to free nitrogen (known as ammoniacal nitrogen) when metals are poured into molds made from these coated cured aggregates as shown in the equations below:

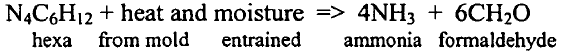

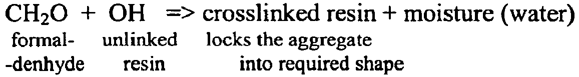

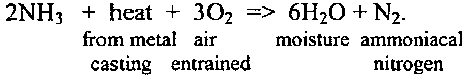

The free nitrogen will pass from the mold into the casting that the mold is set to produce. This free nitrogen can result in a bad casting. Thus, a reduction of ammonia released during the curing process will result in a reduction of free nitrogen that is released during the casting process thereby improving the final cast product.

The inventors found that there were still some residual odors due to some residual ammonia and other by-products such as phenol and formaldehyde. They determined that a masking agent might well remove all traces (actually mask with a pleasant odor) these remaining malodors. A literature search resulted in a suitable agent; however, experimentation was required to determine when the agent should be added and to see if the quality of the resin-coated product was affected by the masking agent. The preferred masking agent is sold as a dry power and can be added with the resin; it can be mixed with water and added after the quench phase with the buffering solution; or it may be added as a powder during the drying stage. Tests determined that the masking agent performed well and that the final quality of the resin-coated sand remained unaffected.

The inventors determined that a product sold by Odor Management, Inc, of Barrington, Illinois under the brand name ECOSORB - 303SG was a suitable buffering agent. ECOSORB is an oil based (botanical) product supposedly in which the ingredients are imported from Australia. Essentially ECOSORB is based on organic hydrocarbon plant extract.

The inventors determined that a product distributed by Univar USA, Inc, of Kirkland, Washington under the brand name VANILLIN was a suitable masking agent. The affects of VANILLIN are not completely understood, although it performs as a masking agent for remaining residual odors such as phenol, formaldehyde, and ammonia. VANILLIN is 4-Hydrox-3-Methoxybenzaldehyde; 3-Methoxy-4-Hydroxbenzaldehyde.

Thus, the inventors discovered that a buffer solution and a masking agent could be included in the formulation of a dry, free flowing
resin-coated sand resulting in a new composition of matter
and method of application. The preferred quantity of buffer solution and masking agents are used in a 50:50 ratio and are to be added in direct proportion to the quantity of hexa that was present in the standard formulation which is determined by laboratory experimentation and simple chemical formulation balance.

Finally a series of product test runs was conducted to determine the range of the preferred 50:50 mix to make up the formulation. It was found that the mix could be adjusted favoring the buffer solution (i.e., more buffer than masking agent) and vice-versa. Table 1 shows the range of the constituents of the formulation that result in the NO odor composition of matter of the instant invention.

Thus, the inventors have discovered a new and useful process for the manufacture of a low ammonia emission novalac resin coated industrial aggregate and have further discovered a new dry, free flowing coated aggregate
composition of matter that reduces any ammonia produced by their novel process to an absolute minimum. Further the instant invention will mask any malodors produced by phenols and the like which appear in novalac system resins.

Thus, it is apparent that there has been provided a composition of matter that comprises a standard formulation for resin-coated sand plus the further ingredients of an ammonia buffering compound and a masking agent added in direct proportion to the quantity of hexa appearing in the standard formulation. There has also been provided a method of manufacture for non-odorous novalac resin-coated sand comprising the addition of a masking agent with the resin, the addition of standard additives, quenching, the addition of a buffering solution and continued mulling to encapsulate the sand and finally drying.

In the alternative, there has also been provided a method manufacture for non-odorous resin-coated sand comprising the addition of resin, the addition of standard additives, quenching, the addition of a buffering solution and masking agent solution and continued mulling to encapsulate the sand. Variations in the order of adding the various ingredients in the instant invention are understood to fall within the spirit of the invention.

## Claims

1. A dry, free-flowing, coated aggregate product, wherein the aggregate is preferably sand, the aggregate being coated with a coating composition having a cure point, the aggregate product remaining free-flowing until the temperature of the product is raised above the cure point, the coating composition comprising:
a resin, wherein the resin is preferably a novalac resin,
a hardener, and
an ammonia buffering agent, that reacts with free ammonia gas,
wherein the coated aggregate product releases minimal free ammonia gas upon curing.

2. The aggregate of claim 1 wherein the composition 1 further comprises:
an odor masking agent.

3. The aggregate of claim 1 or claim 2 wherein said ammonia buffering agent is a compound having hydrogen bound to a second radical wherein said buffering agent reacts with free ammonia gas to form an ammonium salt incorporating said second radical.

4. The aggregate of any preceding claim in which said ammonia buffering agent is an organic hydrocarbon plant extract, preferably ECOSORB - 303SG.

5. The aggregate of any of claims 2 to 4 wherein said odor masking agent comprises 4-hydroxy-3-methoxybenzaldehyde and/or 3-methoxy-4-hydroxybenzaldehyde.

6. The aggregate of any of claims 2 to 5 wherein said ammonia buffering agent and said odor masking agent are present in a 1:1 ratio.

7. The aggregate according to any preceding claim, wherein the hardener is hexamethylenetetramine.

8. A method for coating an industrial aggregate, preferably sand, to form a dry free flowing coated aggregate product having a cure point, the aggregate remaining free flowing until the temperature of the product is raised above the cure point and that releases minimal free ammonia gas when raised above the cure point, the method comprising:
a. heating the aggregate to a temperature between 138°C - 199°C (280°F and 390°F).
b. adding a resin to the aggregate, wherein the resin is preferably a novalac resin
c. optionally adding fillers and waxes,
d. adding a hardener,
e. quenching the mixture and
f. drying the mixture thereby resulting in the dry free flowing coated aggregate product;
and **characterised by** immediately after step (e), adding an ammonia buffering agent that reacts with free ammonia gas.

9. The method of claim 8 further comprising the step of adding a masking agent, and wherein the masking agent is preferably 4-hydroxy-3 methoxybenzaldehyde and/or 3-methoxy-4-hydroxybenzaldehyde.

10. The method of claim 9 wherein the step of adding the masking agent may occur at any step in the method, preferably after the step (e) or at the drying step.

11. The method of any of claims 9 to 10 wherein said ammonia buffering agent and masking agent are present in a 1:1 ratio.

12. The method according to any one of claims 8 to 11 wherein said ammonia buffering agent is an organic hydrocarbon plant extract, preferably ECOSORB - 303SG.

## Patentansprüche

1. Trockenes, rieselfähiges, beschichtetes Aggregatprodukt, wobei das Aggregat vorzugsweise Sand ist, wobei das Aggregat mit einer Beschichtungszusammensetzung beschichtet ist, die einen Aushärtungspunkt aufweist, das Aggregat rieselfähig bleibt, bis die Temperatur des Produkts über den Aushärtungspunkt erhöht wird, die Beschichtungszusammensetzung umfassend:
ein Harz, wobei das Harz vorzugsweise Novalakharz ist,
ein Härtemittel; und
einen Ammoniakpuffer, der mit freiem Ammoniakgas reagiert,
wobei das beschichtete Aggregatprodukt beim Aushärten minimale Mengen freien Ammoniakgases freisetzt.

2. Aggregat nach Anspruch 1, wobei die Zusammensetzung 1 ferner umfasst:
ein geruchsüberdeckendes Mittel.

3. Aggregat nach Anspruch 1 oder Anspruch 2, wobei der Ammoniakpuffer eine Verbindung mit an ein zweites Radikal gebundenem Wasserstoff ist, wobei der Puffer mit freiem Ammoniakgas reagiert, um ein Ammoniumsalz zu bilden, das das zweite Radikal einbezieht.

4. Aggregat nach einem der vorhergehenden Ansprüche, in dem der Ammoniakpuffer ein organisches Kohlenwasserstoffpflanzenextrakt ist, vorzugsweise ECOSORB - 303SG.

5. Aggregat nach einem der Ansprüche 2 bis 4, wobei das geruchsüberdeckende Mittel 4-Hydroxy-3-methoxybenzaldehyd und/oder 3-Methoxy-4-hydroxybenzaldehyd umfasst.

6. Aggregat nach einem der Ansprüche 2 bis 5, wobei der Ammoniakpuffer und das geruchsüberdeckende Mittel in einem Verhältnis von 1:1 vorliegen.

7. Aggregat nach einem der vorhergehenden Ansprüche, wobei das Härtemittel Hexamethylentetramin ist.

8. Verfahren zum Beschichten eines gewerblichen Aggregats, vorzugsweise Sand, um ein trockenes, rieselfähiges, beschichtetes Aggregatprodukt zu bilden, das einen Aushärtungspunkt aufweist, wobei das Aggregat rieselfähig bleibt bis die Temperatur des Produkts über den Aushärtungspunkt erhöht wird, und das minimale Mengen freien Ammoniakgases freisetzt, wenn es über den Aushärtungspunkt erhöht wird, das Verfahren umfassend:
a. Erhitzen des Aggregats auf eine Temperatur zwischen 138 °C - 199 °C (280 °F und 390 °F).
b. Zugeben eines Harzes zum Aggregat, wobei das Harz vorzugsweise Novalakharz ist
c. wahlweises Zugeben von Füllmaterialien und Wachsen,
d. Zugeben eines Härtemittels,
e. Abschrecken des Gemisches und
f. Trocknen des Gemisches, wodurch das trockene, rieselfähige, beschichtete Aggregatprodukt entsteht;
und **dadurch gekennzeichnet, dass** unmittelbar nach Schritt (e) ein Ammoniakpuffer zugegeben wird, der mit freiem Ammoniakgas reagiert.

9. Verfahren nach Anspruch 8, das ferner den Schritt des Zugebens eines überdeckenden Mittels umfasst, wobei das überdeckende Mittel vorzugsweise 4-Hydroxy-3-methoxybenzaldehyd und/oder 3-Methoxy-4-hydroxybenzaldehyd ist.

10. Verfahren nach Anspruch 9, wobei der Schritt des Zugebens des überdeckenden Mittels an einem beliebigen Verfahrensschritt stattfinden kann, vorzugsweise nach Schritt (e) oder am Trocknungsschritt.

11. Verfahren nach einem der Ansprüche 9 bis 10, wobei der Ammoniakpuffer und das überdeckende Mittel in einem Verhältnis von 1:1 vorliegen.

12. Verfahren nach einem der Ansprüche 8 bis 11, wobei der Ammoniakpuffer ein organisches Kohlenwasserstoffpflanzenextrakt ist, vorzugsweise ECOSORB - 303SG.

## Revendications

1. Produit d'agrégat enrobé, capable de s'écouler librement, sec, dans lequel l'agrégat est de préférence du sable, l'agrégat étant enrobé par une composition d'enrobage ayant un point de durcissement, le produit d'agrégat restant capable de s'écouler librement jusqu'à ce que la température du produit soit élevée au-dessus du point de durcissement, la composition d'enrobage comprenant :
une résine, la résine étant de préférence une résine novolaque;
un durcisseur ; et
un agent tampon d'ammoniac qui réagit avec le gaz ammoniac libre,
dans lequel le produit d'agrégat enrobé libère du gaz ammoniac libre minimal lors du durcissement.

2. Agrégat selon la revendication 1, dans lequel la composition comprend en outre un agent de masquage d'odeurs.

3. Agrégat selon la revendication 1 ou la revendication 2, dans lequel ledit agent tampon d'ammoniac est un composé ayant de l'hydrogène lié à un second radical, ledit agent tampon réagissant avec du gaz ammoniac libre pour former un sel d'ammonium incorporant ledit second radical.

4. Agrégat selon l'une quelconque des revendications précédentes, dans lequel ledit agent tampon d'ammoniac est un extrait végétal à base d'hydrocarbures organiques, de préférence l'ECOSORB-303SG.

5. Agrégat selon l'une quelconque des revendications 2 à 4, dans lequel ledit agent de masquage d'odeurs comprend du 4-hydroxy-3-méthoxybenzaldéhyde et/ou du 3-méthoxy-4-hydroxybenzaldéhyde.

6. Agrégat selon l'une quelconque des revendications 2 à 5, dans lequel ledit agent tampon d'ammoniac et ledit agent de masquage d'odeurs sont présents dans un rapport 1:1.

7. Agrégat selon l'une quelconque des revendications précédentes, dans lequel le durcisseur est l'hexaméthylènetétramine.

8. Procédé d'enrobage d'un agrégat industriel, de préférence le sable, pour former un produit d'agrégat enrobé capable de s'écouler librement, sec, ayant un point de durcissement, l'agrégat restant capable de s'écouler librement jusqu'à ce que la température du produit soit élevée au-dessus du point de durcissement et qui libère du gaz ammoniac libre minimal lorsqu'elle est élevée au-dessus du point de durcissement, le procédé comprenant :
a. chauffer l'agrégat à une température entre 138°C-199°C (280°F et 390°F) ;
b. ajouter une résine à l'agrégat, la résine étant de préférence une résine novolaque;
c.facultativement ajouter des charges et des cires ;
d. ajouter un durcisseur ;
e.refroidir brusquement le mélange; et
f.sécher le mélange, permettant ainsi d'obtenir un produit d'agrégat enrobé, s'écoulant librement, sec ;
et **caractérisé par**, immédiatement après l'étape (e), addition d'un agent tampon d'ammoniac qui réagit avec le gaz ammoniac libre.

9. Procédé selon la revendication 8, comprenant en outre l'étape d'addition d'un agent de masquage, et dans lequel l'agent de masquage est, de préférence, le 4-hydroxy-3-méthoxybenzaldéhyde et/ou le 3-méthoxy-4-hydroxybenzaldéhyde.

10. Procédé selon la revendication 9, dans lequel l'étape d'addition de l'agent de masquage peut avoir lieu à n'importe quelle étape dans le procédé, de préférence après l'étape (e) ou à l'étape de séchage.

11. Procédé selon l'une quelconque des revendications 9 et 10, dans lequel ledit agent tampon d'ammoniac et l'agent de masquage sont présents dans un rapport 1:1.

12. Procédé selon l'une quelconque des revendications 8 à 11, dans lequel ledit agent tampon d'ammoniac est un extrait végétal à base d'hydrocarbures organiques, de préférence l'ECOSORB-303SG.
